# EUROPEAN PATENT APPLICATION

(11) **EP 4 702 958 A2**
(43) Date of publication of application: **04.03.2026**
(21) Application number: 25198218.7
(22) Date of filing: 26.08.2025
(51) Int. Cl.: A61G 7/10

(54) **SYSTEMS AND METHODS FOR BATTERY MANAGEMENT OF SUBJECT LIFT UNITS**

(30) Priority: 30.08.2024 US 202463689105 P
(71) Applicant: Liko Research & Development AB, 975 92 Luleå (SE)
(72) Inventor: APPRIOU, Ronan, S-975 92 Luleå (SE); AUDIC, Mickael, S-975 92 Luleå (SE)
(74) Representative: Reddie & Grose LLP

(57) **Abstract**

A rail-mounted lift system includes a conductive rail electrically coupled to a power source; and a lift unit supported by the conductive rail, the lift unit comprising a battery and a switch for selectively coupling the battery to the power source via the conductive rail, the lift unit being configured to: determine a state of charge of the battery, determine a selected charge profile, and actuate the switch to supply power from the power source based on the state of charge and the selected charge profile.

## Description

### FIELD

The present disclosure generally relates to subject lift units, and more particularly, to battery management of subject lift units.

### BACKGROUND

Batteries that are used to power various devices can be charged to a maximum capacity when connected to a power source, regardless of the starting state of charge. However, current battery technology is configured in such a way that the more a battery is power cycled (e.g., charged and discharged), the overall lifetime of the battery (usable life) and amount of power available from each charge decreases with use, thereby decreasing the effectiveness of the battery over time. While the batteries themselves can be replaced to alleviate this issue, this can lead to apparatus operability, efficiency, and compatibility issues, and can also be cost-prohibitive due to the type of material used for the battery. Conventional systems exist for ensuring a maximum overall lifetime of the battery and/or persevering the amount of power available from each charge, but fail to account for particular types of apparatuses and uses.

### SUMMARY

In one aspect, a rail-mounted lift system may include a conductive rail electrically coupled to a power source. The rail-mounted lift system may include a lift unit. The lift unit may be supported by the conductive rail. The lift unit may include a battery and a switch for selectively coupling the battery to the power source via the conductive rail. The lift unit may be configured to determine a state of charge of the battery. The lift unit may be configured to determined a selected charge profile. The lift unit may be configured to actuate the switch to supply power from the power source based on the state of the charge and the selected charge profile.

In another aspect, a method to be performed by a lift unit of a rail-mounted system is provided. The method may include determining, by the lift unit of a rail-mounted lift system, a state of charge of a battery. The rail-mounted lift system may include a conductive rail electrically coupled to a power source and the lift unit. The lift unit may be supported by the conductive rail and the lift unit may include the battery and a switch for selectively coupling the battery to the power source via the conductive rail. The method may include determining, by the lift unit, a selected charge profile. The method may include actuating the switch to supply power from the power source based on the state of charge and the selected charge profile.

In another aspect, a lift unit may include a lift motor. The lift unit may include a battery electrically coupled to the lift motor to supply electrical power for actuating the lift motor. The lift unit may include a switch electrically coupled between the battery and a power source. The lift unit may include a controller configured to determine a state of charge of the battery. The controller may be configured to determine a selected charge profile. The controller may be configured to actuate the switch to cause power to be delivered from the power source to the battery based on the state of charge and the selected charge profile.

In yet another aspect, a non-transitory, computer-readable medium may include instructions that, when executed by at least one processor, cause the at least one processor to perform one or more operations including determining, by a rail-mounted lift system, a state of charge of a battery. The rail-mounted lift system may include a conductive rail electrically coupled to a power source and a lift unit. The lift unit may be supported by the conductive rail and the lift unit may include a battery and a switch for selectively coupling the battery to the power source via the conductive rail. The one or more operations may include determining a selected charge profile. The one or more operations may include actuating the switch to supply power from the power source based on the state of charge and the selected charge profile.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosure. As used in the specification and in the claims, the singular form of 'a', 'an', and 'the' include plural referents unless the context clearly dictates otherwise.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, wherein like structure is indicated with like reference numerals and in which:
FIG. 1 schematically depicts an illustrative lift system including an illustrative lift unit coupled to an electrically conductive rail according to one or more aspects shown and described herein;
FIG. 2A schematically depicts a carriage for use with the illustrative lift system of FIG. 1 according to one or more aspects shown and described herein;
FIG. 2B schematically depicts a partially exploded view of the carriage of FIG. 2A according to one or more aspects shown and described herein;
FIG. 3 schematically depicts the electrical interconnectivity of the various components of the illustrative lift system of FIG. 1 according to one or more aspects shown and described herein;
FIG. 4 schematically depicts a cross section of a portion of the electrically conductive rail of FIG. 1 according to one or more aspects shown and described herein;
FIG. 5 schematically depicts an illustrative user interface component of the illustrative lift unit of FIG. 1 according to one or more aspects shown and described herein;
FIG. 6A depicts an example user interface screen of the user interface component of the illustrative lift unit of FIG. 1 and FIG. 5 according to one or more aspects shown and described herein;
FIG. 6B depicts another example user interface screen of the user interface component of the illustrative lift unit of FIG. 1 and FIG. 5 according to one or more aspects shown and described herein;
FIG. 6C depicts yet another example user interface screen of the user interface component of the illustrative lift unit of FIG. 1 and FIG. 5 according to one or more aspects shown and described herein;
FIG. 6D depicts still another example user interface screen of the user interface component of the illustrative lift unit of FIG. 1 and FIG. 5 according to one or more aspects shown and described herein; and
FIG. 7 depicts a flow diagram of an illustrative method performed by illustrative lift unit of FIG. 1 according to one or more aspects shown and described herein.

### DETAILED DESCRIPTION

The present disclosure relates to battery management of subject lift units. In particular, the devices, systems, and methods disclosed herein are directed to subject lift units that include a battery and are selectively coupled to a power source, such as a power source integrated with a conductive rail such that power to charge the battery is selectively supplied based on a number of factors including, but not limited to, a state of charge of the battery and a selected charge profile. However, it should be understood that any other type of apparatus, such as a subject support system apparatus or a ceiling lift apparatus, incorporating the lift unit including a switch may be used, including, but not limited to, lawn and agricultural equipment, automotive equipment, various machinery, office equipment, medical equipment, and the like. By selectively coupling the battery to the power source via the conductive rail, the switch can be actuated to supply power from the power source to the battery when appropriate and the battery life in a lift is maximized, thereby ensuring that the capacity of the battery is not quickly diminished. Further, a selected charge profile may be customizable by the user to charge the battery instead of relying upon a default programmed charge of the lift, such as in instances where a user may prefer battery charging more or less frequently depending on usage or anticipated usage.

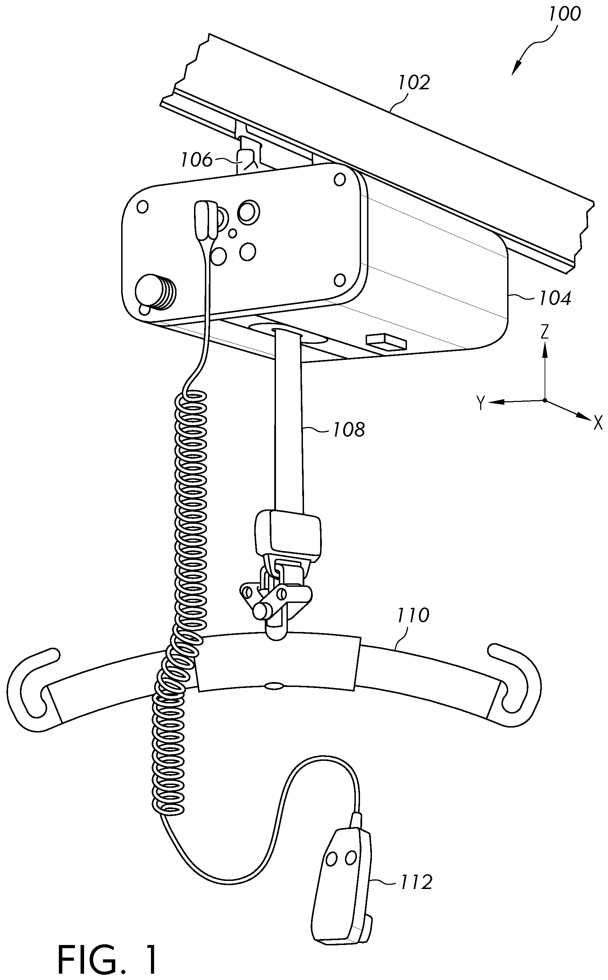

FIG. 1 schematically depicts an illustrative lift system 100, such as a rail-mounted lift system, including an illustrative lift unit 104 coupled to an electrically conductive rail 102 according to one or more aspects shown and described herein. The system 100 may further include a carriage 106, a lifting strap 108, a sling bar 110, and a controller 112. Although FIG. 1 illustrates single instances of the constituent components of the illustrative lift system 100, the illustrative lift system 100 may include any number of constituent components.

The rail-mounted lift system 100 generally includes the lift unit 104 slidably coupled to the electrically conductive rail 102 with the carriage 106. The electrically conductive rail 102 includes a conductor (not shown) which is electrically coupled to a power supply (not shown). In certain embodiments, conductive tape 114 may extend along the conductive rail 102 and may include conductive elements, such as lines, traces, or the like (and formed from conductive material such as copper), extending through the conductive tape 114, such that contact with the conductive tape 114 provides an electrical connection to the power source. In some embodiments, the conductive tape 114 may be coupled to the conductive rail 102, such as with an adhesive. In other embodiments, the conductive tape 114 may be integral with the conductive rail 102. For example, the conductive rail 102 may be at least partially made from conductive material and/or may include pathways, traces, or the like of conductive material formed within the conductive rail 102. In certain embodiments, the conductive tape 114 may be positioned against a surface of the conductive rail.

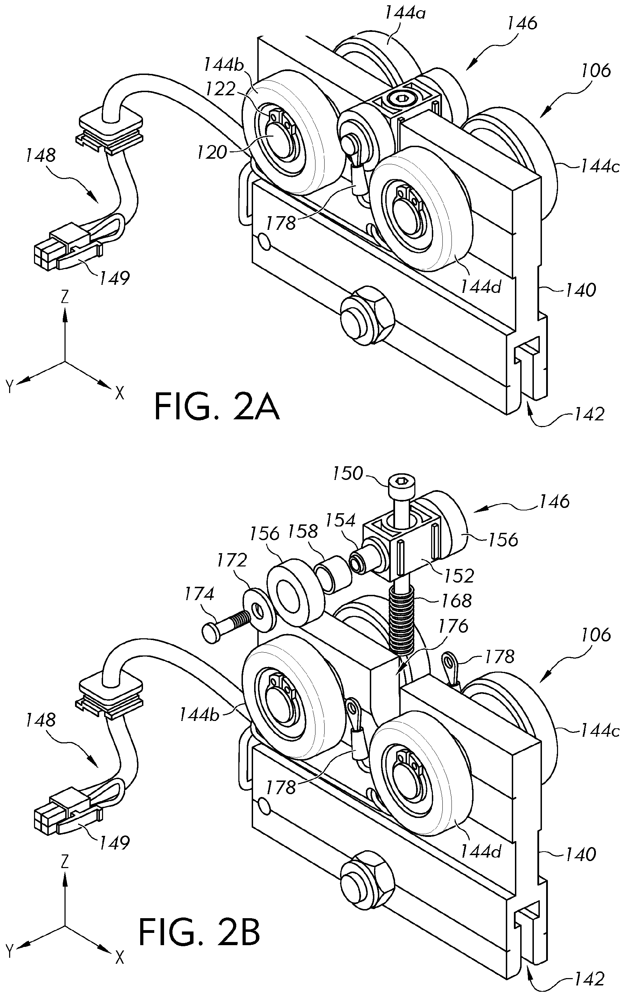

FIG. 2A schematically depicts a carriage for use with the rail-mounted lift system 100 of FIG. 1. FIG. 2B schematically depicts a partially exploded view of the carriage of FIG. 2A. Although FIGS. 2A-2B illustrate single instances of the constituent components of the carriage 106, the carriage 106 may include any number of constituent components. Further, FIGS. 2A-2B may reference and incorporate any of the above constituent components and operations of rail-mounted lift system 100 of FIG. 1.

Referring now to FIGS. 2A and 2B, the carriage 106 generally includes a carriage body 140 to which a plurality of support wheels 144 a, 144 *b,* 144 c, and 144 *d* are rotatably attached for supporting the carriage 106 in the rail. The support wheels 144 a, 144 *b,* 144 c, and 144 *d* facilitate positioning the carriage 106 and lift unit along the length of the rail. In the embodiments described herein, the carriage 106 is depicted with four support wheels. However, it is contemplated that the carriage 106 may be constructed with fewer than four support wheels. For example, in some embodiments, the carriage may be constructed with one or two support wheels (e.g., a pair of support wheels). Accordingly, it should be understood that the carriage 106 includes at least one support wheel. The support wheels 144 *a-d* are positioned on axles 120 which extend transversely through the carriage body 140. Each support wheel is secured to the axle 120 with a fastener, such as retaining clips 122, such that the support wheels are rotatable on the axle 120.

In the embodiment of the carriage 106 depicted in FIGS. 2A and 2B, the support wheels 144 a, 144 *b,* 144 c, and 144 *d* are passive (e.g., the support wheels are not actively driven with a motor or a similar drive mechanism) and the lift unit is manually traversed along the rail. However, in alternative embodiments (not shown), the support wheels may be actively driven such as when the support wheels are coupled to a motor or a similar mechanism. In such embodiments, the drive mechanism may be communicatively coupled to a controller (such as controller 112 shown in FIG. 1) which actuates the drive mechanism and facilitates traversing the lift unit along the rail with the drive mechanism.

In the embodiments described herein, the carriage 106 further includes at least one conductive roller 156 (two shown in FIGS. 2A and 2B). The conductive rollers 156 electrically couple the battery and/or the motor of the lift unit to a conductor positioned in the rail to which the lift unit is attached, as described in more detail herein. The conductive rollers 156 are formed from an electrically conductive material such as copper or a copper alloy, aluminum or an aluminum alloy, steel, or a similar conductive metallic material and/or alloy. Alternatively, the conductive rollers 156 may be formed from an electrically conductive polymer material. In the embodiments described herein, the conductive rollers are formed from an oil-bronze, specifically SNF-12 oil bronze. However, it should be understood that the conductive rollers may be formed from other conductive materials.

In the embodiments described herein, the conductive rollers 156 are rotatably attached to a conductor truck 146 which, in turn, is mounted to the carriage body 140. Specifically referring to FIG. 2B, the conductor truck 146 is formed from a polymeric material and includes at least one axle 154 to which the conductive rollers are rotatably attached. In the embodiment of the conductor truck 146 shown in FIG. 2B, the axle 154 is integrally formed with the conductor truck 146. However, in other embodiments, the axles 154 may be independent of the conductor truck 146, such as when a separate axle is utilized in conjunction with the conductor truck 146.

The conductive rollers 156 are positioned on the axles 154 of the conductor truck 146 and a spacer 158 is positioned between the conductive roller 156 and the axle 154 to facilitate rotation of the conductive roller 156 on the axle 154. In the embodiments described herein, the spacer 158 is formed from an electrically conductive material, such as steel. However, it should be understood that the spacer 158 may be formed from other electrically conductive materials, including, without limitation, other electrically conductive metals and alloys and/or electrically conductive polymeric materials. The conductive rollers 156 are secured on their respective axles 154 with a fastener 174 and a washer 172, both of which are electrically conductive. Specifically, the washer 172 is sized such that the washer 172 is in direct contact with the conductive roller 156 and/or the spacer 158 when the conductive roller 156 is secured on the conductor truck 146 with fastener 174.

As noted hereinabove, the conductor truck 146 is attached to the carriage body 140. Specifically, the carriage body 140 comprises a cutout feature 176 formed in an upper portion of the carriage body 140. The conductor truck 146 is positioned in the cutout feature 176 with a biasing member 168, such as a compression spring or another suitable biasing member, positioned between the conductor truck 146 and the carriage body 140. The conductor truck 146 is secured to the carriage body 140 with a fastener 150 which extends through the conductor truck 146 and the biasing member 168 and into the carriage body 140. The fastener 150 prevents the lateral movement of the conductor truck 146 with respect to the carriage body 140. When the conductor truck 146 is installed in the cutout feature 176 and secured with fastener 150 the biasing member 168 bias the conductor truck 146 and the conductive rollers 156 upwards (i.e., in the z-direction in the coordinate axes depicted in FIG. 2B) and away from the carriage body 140.

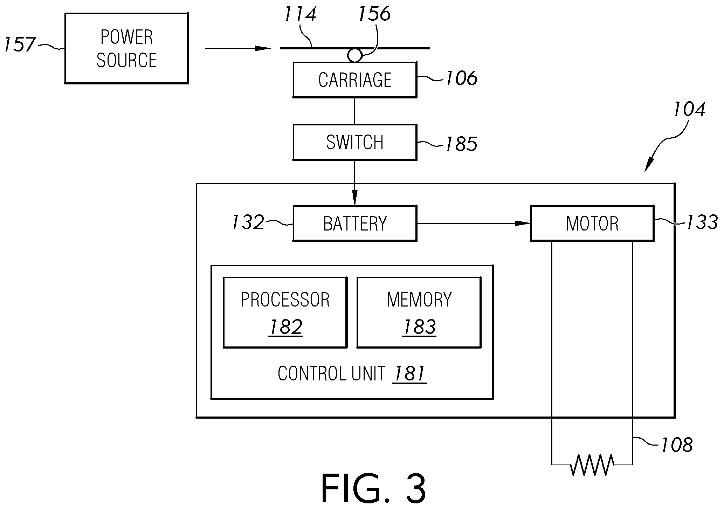

The rail-mounted lift system 100 may include a lift unit 104 which is slidably coupled to the electrically conductive rail 102 with the carriage 106. Briefly referring to FIG. 3, the lift unit 104 may be used to support and/or lift a subject with the lifting strap 108 which is coupled to a motor 133 contained within the lift unit 104. The motor 133 facilitates paying-out or taking-up the lifting strap 108 from the lift unit 104, thereby raising and lowering a subject attached to the lifting strap 108. In the embodiments described herein, the lift unit 104 further includes a battery 132 which is housed in the lift unit 104 and electrically coupled to the motor 133 thereby providing power to the motor 133. However, it should be understood that, in other embodiments, the lift unit 104 may be constructed without the battery 132, such as when the motor 133 is directly coupled to the conductors located in the electrically conductive rail 102.

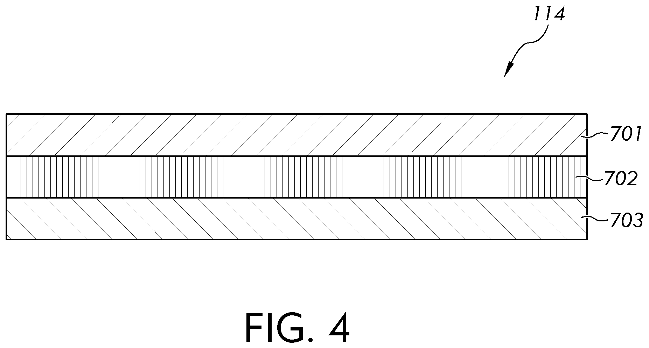

The conductive tape 114 may include flexible conductive tape which generally comprises an insulating layer 701, a primary conductive layer 702, and a protective layer 703. Referring briefly to FIG. 4, which schematically depicts a cross section of a portion of the electrically conductive rail 102 of FIG. 1, the layers are ordered such that the primary conductive layer 702 is positioned between the insulating layer 701 and the protective layer 703. When a conductor is positioned in an upper portion of the conductive rail 102, as described above, the insulating layer 701 is positioned closest to the upper portion of the conductive rail 102 while the protective layer 703 is furthest from the upper portion of the conductive rail 102.

In one embodiment, the insulating layer 701 is formed from an electrically insulating material, such as an insulating polymeric material, which also functions to adhesively bond the conductor to the upper portion of the rail 102. For example, the insulating polymeric material may be polyethylene terephthalate (PET) or a similar polymeric material. The insulating layer 701 may generally have a thickness of less than about 100 um. For example, in one embodiment, the PET has a thickness of about 50 um. The insulating layer 701 prevents current conducted through the primary conductive layer 702 from being conducted to the conductive rail 102 when the conductor is positioned on the upper portion of the conductive rail 102. The insulating layer 701 may be adhesively bonded to the rail with an adhesive material. For example, in one embodiment, the insulating layer 701 is bonded to the upper portion of the conductive rail 102 with a double-sided adhesive tape, such as, for example, 9495 LE adhesive tape manufactured by 3M.

The primary conductive layer 702 is formed from an electrically conductive material such as copper or a copper alloy. For example, in one embodiment, the electrically conductive tape 114 is formed from E-Cu58 copper alloy. However, it should be understood that the primary conductive layer 702 may be formed from other conductive materials including, without limitation, other elemental metallic materials and/or alloys thereof. The primary conductive layer 702 may generally have a thickness of less than about 100 um. For example, in one embodiment, the primary conductive layer 702 has a thickness of about 50 um. In one embodiment, the primary conductive layer 702 comprises multiple layers of conductive material, such as when the primary conductive layer 702 is constructed of two or more layers of conductive material such as copper or a copper alloy. The primary conductive layer 702 may be bonded to the insulating layer 701 with an adhesive material. For example, in one embodiment, the primary conductive layer 702 is adhesively bonded to an insulating layer 701 with a double-sided adhesive tape such as, for example 55256 double-sided adhesive tape manufactured by 3M.

The protective layer 703 is formed from a polymeric material. For example, the polymeric material may be a polyester, such as a polyester fabric. Alternatively, the polymeric material may be a polymeric film. In one embodiment, the protective layer is a polyester fabric coated with a conductive material such as, for example, CN-3190 conductive fabric tape manufactured by 3M which is coated on one side with an electrically conductive acrylic adhesive. The protective layer 703 may generally have a thickness of less than about 200 um. For example, in one embodiment, the protective layer has a thickness of less than about 180 um. When the conductor is positioned on the upper portion of the conductive rail 102, the conductor is oriented such that conductive rollers of the carriage 106 are in rolling engagement with the protective layer 703, thereby enabling current flowing through the primary conductive layer 702 to pass through the protective layer 703 to the conductive rollers. While the protective layer 703 facilitates passing current from the primary conductive layer 702 to the conductive rollers, the protective layer also protects the primary conductive layer 702 from wear and/or corrosion. For example, the protective layer 703 provides a barrier between the primary conductive layer 702 and the outside environment. In addition, the protective layer 703 mitigates wear and/or other mechanical damage as the conductive rollers of the carriage are rolled along the conductor. It should be appreciated that the configuration depicted in FIG. 4 is merely illustrative, and other configurations for the conductive rail are contemplated and included within the scope of the present disclosure.

Referring back to the rail-mounted lift system 100 shown in FIG. 1, a subject may be supported by the lifting strap 108 with a sling bar 110 or a similar accessory attached to the lifting strap 108. More specifically, the sling bar 110 or a similar accessory may be attached to a harness or sling in which the subject is positioned, thereby facilitating the lifting operation. The lift unit 104 may be actuated with the controller 112, which is communicatively coupled to the motor 133. In the embodiment shown in FIG. 1, the controller 112 may be directly wired to the lift unit 104. However, it should be understood that, in other embodiments, the controller 112 may be wirelessly coupled to the lift unit 104 to facilitate remote actuation of the lift unit 104, as will be further explained below.

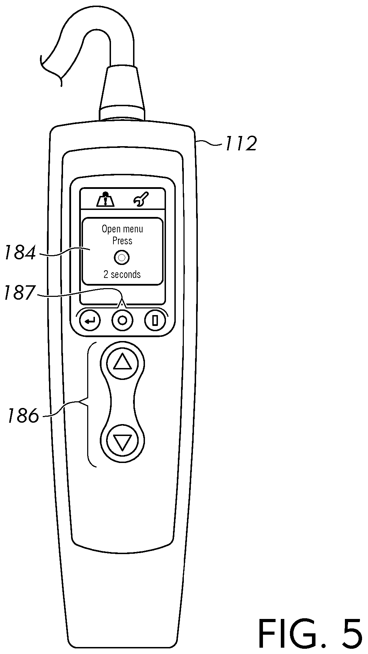

FIG. 5 illustrates a controller 112 that includes a user interface 184, a first set of buttons 186, and a second set of buttons 187. In certain embodiments, the controller 112 may include any type of controller, such as a corded controller or a cordless controller, that is configured to provide input to a control unit 181 of a lift unit 104 via the user interface 184, as further explained with respect to FIG. 3. In certain embodiments, the controller 112 may include a remote computing device, such as one or more processing devices. By way of example, the processing device may be a network-enabled computer. As referred to herein, a network-enabled computer may include, but is not limited to a computer device, or communications device including, e.g., a server, a network appliance, a personal computer, a workstation, a phone, a handheld PC, a personal digital assistant, a thin client, a fat client, an Internet browser, or other device. The processing device also may be a mobile device; for example, a mobile device may include an iPhone, iPod, iPad from Apple^{®} or any other mobile device running Apple's iOS^{®} operating system, any device running Microsoft's Windows^{®} Mobile operating system, any device running Google's Android^{®} operating system, and/or any other smartphone, tablet, or like wearable mobile device. Without limitation, the remote computing device may include a server that is configured as a central system or platform to monitor and control and call various data to execute a plurality of actions that are carried out by the controller 112 or in lieu of the controller 112, such as controlling remote actuation of the lift unit 104, determining, receiving, selecting, and/or providing input corresponding to selection of the one or more "Battery profiles" 425, selecting a charge profile, and determining a state of charge of the battery 132, as disclosed herein.

The controller 112 may further include one or more interface components (not shown) that are generally hardware components that provide an interface with a user or an external device. For example, the one or more interface components may include user interface components, communications hardware, and/or the like. Illustrative examples of the one or more interface components include, but are not limited to, hardware components that receive inputs from a user and transmit signals corresponding to the inputs, such as a keyboard, a mouse, a joystick, a touch screen, a remote control, a pointing device, a video input device, an audio input device, a haptic feedback device, a touchscreen and/or the like. Other illustrative examples of the one or more interface components include, but are not limited to, network interface hardware (e.g., wired or wireless networking hardware), such as a modem, LAN port, wireless fidelity (Wi-Fi) card, WiMax card, mobile communications hardware, and/or other hardware for communicating with other networks and/or devices. Other devices that may be used for the one or more interface components not specifically described herein are contemplated and included in the scope of this disclosure.

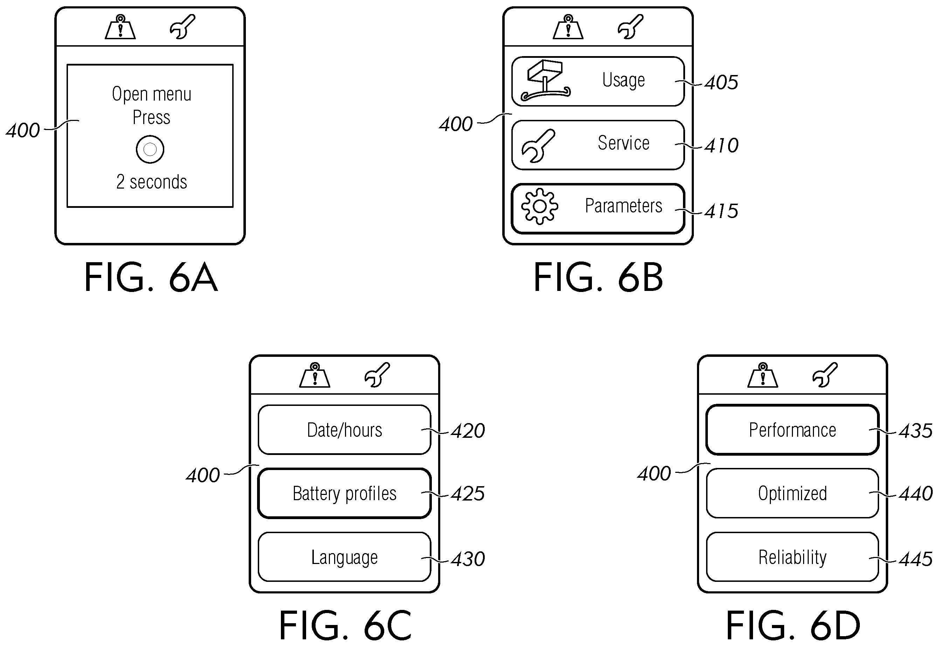

The user interface 184 may include a display interface, such as a touchscreen display interface. The user interface 184 may receive and display any type of input, including input from one or more sets of buttons. The one or more sets of buttons may include a first set of buttons 186 and a second set of buttons 187. The first set of buttons 186 may include "up" and "down" arrow buttons to lift the sling bar 110 in a respective direction. Other buttons, including "rotate", "flip", "left", "right", "turn", and the like may also be included. The second set of buttons 187 may include navigation buttons to, for example, confirm a selection displayed on a display screen of the user interface 184, exit a display screen displayed on the user interface 184, go back to a previous display screen displayed on the user interface 184, select a menu displayed on a display screen of the user interface 184, or the like. Operations of the controller 112 will be further explained with respect to FIGS. 6A-6D.

FIG. 6A depicts an example user interface screen of the user interface component of the lift unit of FIG. 1 and FIG. 5; FIG. 6B depicts another example user interface screen of the user interface component of FIG. 1 and FIG. 5; FIG. 6C depicts yet another example user interface screen of the user interface component of the lift unit of FIG. 1 and FIG. 5; FIG. 6D depicts still another example user interface screen of the user interface component of the lift unit FIG. 1 and FIG. 5.

FIG. 6A depicts a user interface screen 400 of a controller 112 of FIG. 1 and FIG. 5. For example, the user interface screen 400 may display an "Open menu". By way of example, an operator may select one of the buttons from the second set of buttons 187 to confirm opening of the menu by pressing the corresponding button. In certain embodiments, selection of one of the buttons from the "Open menu" may time out after, by way of example, expiration of a predetermined time period, such as two seconds. Upon selection of one of the buttons, and with reference to FIG. 6B, a menu may be displayed on the user interface screen 400 of the controller 112. The menu may include selections and display corresponding icons for "Usage" 405, "Service" 410, and "Parameters" 415. The "Usage" 405 selection may correspond to usage of the lift unit 104. The "Service" 410 selection may correspond to requesting service or troubleshooting issues associated with the lift unit 104. The "Parameters" 415 selection may correspond to a second menu including different selections, as explained with reference to FIG. 6C. In certain embodiments, one of the buttons from the second set of buttons 187 may used to highlight and select, for example, one of the menu selections, such as the "Parameters" 415.

Upon selection of the "Parameters" 415, and with reference to FIG. 6C, a second menu may be displayed on the user interface screen 400 of the controller 112. The second menu may include selections corresponding to "Date/hours" 420, "Battery profiles" 425, and "Language" 430. In certain embodiments, one of the buttons from the second set of buttons 187 may used to highlight and select, for example, one of the menu selections, such as the "Battery profiles" 425.

Upon selection of the "Battery profiles" 425, and with reference to FIG. 6D, a third menu may be displayed on the user interface screen 400 of the controller 112. The third menu may include selections corresponding to "Performance" 435, "Optimized" 440, and "Reliability" 445". Each of the selections from the third menu in FIG. 6D, Performance" 435, "Optimized" 440, and "Reliability" 445", correspond to different charge profiles of the battery 132, as will be now further explained.

As depicted in FIG. 6D, one or more charge profiles may be selected from the third menu and can be defined from a battery efficiency perspective and thereby extend the lifecycle of the battery 132. By way of example, a first charge profile may correspond to a performance charge profile, a second charge profile may correspond to an optimized charge profile, and a third charge profile may correspond to a reliability charge profile. As will be further explained, each of the charge profiles may be defined to include their respective maximum charge capacity and recharge threshold capacity.

The performance charge profile, such as "Performance" 435, may include an operation mode in which the battery 132 is not forced to enter a deep discharge mode. For example, the operation mode of the performance charge profile may include charging the battery 132 to a maximum predetermined threshold value, such as 100%, after the battery 132 has reached a predetermined threshold value of, for example, 95%. It is understood that charging the battery 132 to 100% after the battery 132 has reached 95% are exemplary capacity percentages and not considered to be limiting, and that other percentages or amounts may be utilized. As used herein, "deep discharge" refers to discharging a predetermined portion, such as a percentage or an amount, relative to a rated total capacity of a battery 132 until a cut-off point voltage is reached. Without limitation and by way of example, the deep discharge may include discharging greater than 50% of the rated total capacity of the battery 132, greater than 60% of the rated total capacity of the battery 132, greater than 70% of the rated total capacity of the battery 132, greater than 80% of the rated total capacity of the battery 132, greater than 90% of the rated total capacity of the battery 132, or greater than 95% of the rated total capacity of the battery 132.

The optimized charge profile, such as "Optimized" 440, may include an operation mode in which the battery 132 is not forced to enter a deep discharge mode. For example, the operation mode of the optimized charge profile may include charging the battery 132 to a maximum predetermined threshold value, such as 95%, after the battery 132 has reached a predetermined threshold value of, for example, 85%. It is understood that charging the battery 132 to 95% after the battery 132 has reached 85% are exemplary capacity percentages and not considered to be limiting, and that other percentages or amounts may be utilized.

The reliability charge profile, such as "Reliability" 445, may include an operation mode in which the battery 132 is forced to enter a deep discharge mode. For example, the operation mode of the reliability charge profile may include deep discharging the battery 132 to a predetermined threshold percentage value, and then recharging the battery 132 to a maximum threshold percentage value, such as 95%. It is understood that deep discharging the battery 132 and then recharging the battery 132 until it has reached 95% are exemplary capacity percentages and not considered to be limiting, and that other percentages or amounts may be utilized.

In certain embodiments, the battery 132 may be charged by the power source, and in particular, based on the type of the power source in accordance with a charge profile. In certain embodiments, the battery 132 may be charged via a wall charger, such as a main AC power source. In certain embodiments, the battery 132 may be charged via in-rail charging, such as via the in-rail charging assembly previously explained.

In certain embodiments, based on the power source including a wall charger to charge the battery 132, a suggested charge profile may include charging the battery 132 under a "Performance" 435 operation mode. By way of example, in the case of the wall charger, charging of the battery 132 may occur only during a predetermined time, such as during night hours or morning hours or afternoon hours or evening hours once per day. The "Performance" 435 operation mode to charge the battery 132 may be selected to reach a maximum number of lifts occurring or expected to occur during the day.

In certain embodiments, based on the power source that charges the battery 132 via the in-rail charging assembly, a suggested charge profile may include charging the battery 132 under a "Reliability" 445 operation mode. By way of example, in the case of in-rail charging, as the power source is always available, charging of the battery 132 under the "Reliability" 445 operation mode can be used to save battery 132 life since repeated charging is not needed and thereby battery 132 stressing is avoided thereby extending the duration of the battery 132. That is, while there is a constant power supply in the electrically conductive rail 102, charging of the battery 132 may not begin until a minimum threshold value is reached.

Referring again to FIG. 3, the electrical interconnectivity of the various components of the illustrative lift system 100 of FIG. 1 is depicted. For example, where the lift unit 104 includes the battery 132, the current from a power lead (not shown) charges the battery 132 and may also power the motor 133. In these embodiments, the motor 133 may be actuated with either current from the battery 132 or current supplied directly from the power lead. Alternatively, in embodiments (not shown) where the lift unit 104 does not include a battery 132, the current supplied to the lift unit 104 with the power lead can power the motor 133.

In addition, because the conductors extend along the entire length of the electrically conductive rail 102 and the conductive rollers 156 are in rolling engagement with the conductors as the lift unit 104 is traversed over the length of the electrically conductive rail 102, it should be understood that power can be continuously provided to the lift unit 104 irrespective of the position of the lift unit 104 relative to the electrically conductive rail 102 (e.g., power is provided to the lift unit 104 at every point along the length of the electrically conductive rail 102).

With further reference to FIG. 3, the lifting unit 104 may include a control unit 181. The control unit 181 may include a processor 182 and a non-transitory processor-readable storage medium 183. The control unit 181 may be configured to control charging of the battery 132 based on input received from a controller, such as a controller 112 of FIG. 1 and/or FIG. 5. In some such embodiments, the control unit 181 may receive input from an operator, such as via a button or switch on a user interface 184 of the controller 112.

The processor 182, such as a central processing unit (CPU), may be the central processing unit that is configured to perform calculations and logic operations to execute one or more programs. The processor 182, alone or in conjunction with the other components, may be an illustrative processing device, computing device, processor, or combinations thereof, including, for example, a multi-core processor, a microcontroller, a field-programmable gate array (FPGA), or an application-specific integrated circuit (ASIC). The processor 182 may include any processing component configured to receive and execute instructions (such as from the non-transitory, processor-readable storage medium 183). In some embodiments, the processor 182 may include a plurality of processing devices.

The non-transitory, processor-readable storage medium 183 may contain one or more data repositories for storing data that is received and/or generated. The non-transitory, processor-readable storage medium 183 may be any physical storage medium, including, but not limited to, a hard disk drive (HDD), memory (e.g., read-only memory (ROM), programmable read-only memory (PROM), random access memory (RAM), double data rate (DDR) RAM, flash memory, and/or the like), removable storage, a configuration file (e.g., text) and/or the like. While the non-transitory, processor-readable storage medium 183 is depicted as a local device, it should be understood that the non-transitory, processor-readable storage medium 183 may be a remote storage device, such as, for example, a server computing device, cloud-based storage device, or the like. The non-transitory, processor-readable storage medium 183 may be communicatively coupled to the processor 182.

The non-transitory, processor-readable storage medium 183 may include one or more instructions stored thereon that, when executed, cause the processor 182 to perform any number of operations. For example, the non-transitory, processor-readable storage medium 183 may include one or more instructions stored thereon that, when executed, cause the processor 182 to display, on a user interface, a menu include a plurality of charge profiles to charge the battery with a power source. The user interface may refer to the user interface 184 of the controller 112, as explained with respect to FIG. 5. The processor 182 may be configured to charge the battery 146 via a power source (not shown) in accordance with one charge profile selected from a plurality of charge profiles. For example, on the user interface 184, at least one charge profile includes charging the battery 132 to a first maximum predetermined threshold value after the battery 132 reaches a first predetermined threshold value, at least one charge profile includes charging the battery 132 to a second maximum predetermined threshold value after the battery 132 reaches a second predetermined threshold value, and at least one charge profile includes deep discharging the battery 132 to a third predetermined threshold value prior to charging the battery 132 to a third maximum predetermined threshold value.

The non-transitory, processor-readable storage medium 183 may include one or more instructions stored thereon that, when executed, cause the processor 182 to receive, from the user interface 184, a selection of one of the charge profiles to charge the battery 132. For example, the processor 182 may receive a selected charge profile to charge the battery 132 with the power source. The selection of one of the charge profiles may be realized through the user interface 184 of the controller 112, as further explained with respect to FIG. 5 and 6A-6D.

The non-transitory, processor-readable storage medium 183 may include one or more instructions stored thereon that, when executed, cause the processor 182 to charge the battery 132 in accordance with the received selection of the charge profile. In certain embodiments, the processor 182 may be configured to determine a type of the power source before suggesting a particular charge profile in accordance with the type of the power source. For example, the power source may include a wall charger, and the suggested one of the charge profiles may include charging the battery 132 to a first maximum predetermined threshold value after the battery 132 reaches a first predetermined threshold value. In certain embodiments, the type of the power source may include an in-rail charging assembly (not shown) via the electrically conductive rail 102, wherein in-rail charging of the battery 132 occurs via the in-rail charging assembly, and the suggested one of the charge profiles includes deep discharging the battery 132 to a third predetermined threshold value prior to charging the battery 132 to a third maximum predetermined threshold value.

The non-transitory, processor-readable storage medium 183 may include one or more instructions stored thereon that, when executed, cause the processor 182 to monitor whether a capacity of the battery 132 is equal to or greater than a predetermined threshold value over a predetermined time period prior to forcing deep discharge of the battery 132. By way of example, in the case of the battery 132 including a lithium battery, the processor 182 may be configured to monitor on a periodic basis (such as hourly, daily, weekly, monthly, or the like) when the battery 132 reached a predetermined threshold percentage value of, for example, 30%.

The non-transitory, processor-readable storage medium 183 may include one or more instructions stored thereon that, when executed, cause the processor 182 to generate a message indicative of the capacity of the battery 132 being equal to or greater than the predetermined threshold value over the predetermined time period. The non-transitory, processor-readable storage medium 183 may include one or more instructions stored thereon that, when executed, cause the processor 182 to output the message to the user interface in the form of a haptic vibration, a display, a sound emission, or any combination thereof.

The lift unit 104 may further include a switch 185. The switch 185 is generally positioned at any location between the conductive tape 114 and the battery 132 and is generally any device that selectively couples the battery 132 to the power source via the electrically conductive rail 102 (FIG. 1). While FIG. 3 depicts the switch 185 between the carriage 106 and battery 132, it should be understood that this location is illustrative, and any other location between the conductive tape 114 and the battery 132 is contemplated and included in the scope of the present disclosure. In addition, the switch 185 may generally be any mechanical or electronic switch that can be electronically or manually controlled to provide or remove current to the battery 132. Illustrative examples include, but are not limited to, a toggle switch, a pushbutton switch, a selector switch, a limit switch, a proximity switch, a pressure switch, a temperature switch, a bipolar transistor, a power diode, a Metal Oxide Semiconductor Field Effect Transistor (MOSFET), an Insulated Gate Bipolar Transistor (IGBT), a Silicon Controlled Rectifier (SCR), a Triode AC (TRIAC) switch, a Diode AC (DIAC) switch, a thyristor, or the like. It should be appreciated that certain examples of the switch 185 described herein may further include additional components for controlling operation of the switch 185 via the control unit 181 (and/or components thereof). However, since such additional components are generally understood, they are omitted herein solely for the purposes of brevity.

As noted hereinabove, the switch 185 may be configured to selectively couple the battery 132 to the power source via the electrically conductive rail 102. Moreover, the lift unit 104 may be configured to actuate the switch 185 to supply power from the power source based on the state of charge and the selected charge profile. Still further, the lift unit 104 may be configured to decouple the battery 132, via the switch 185, from the power source to discharge the battery 132 to a predetermined value, such as a reduced state of charge of the battery 132. The lift unit 104 may further be configured to actuate the switch 185 to supply the power from the power source to charge the battery 132 to a second predetermined value that, in some examples, exceeds the state of the charge of the battery 132.

For example, the switch 185 may include a pushbutton switch. Upon actuation of the switch 185, for example by pressing a button corresponding to the pushbutton switch, the lift unit 104 may be configured to open or close the switch 185. Once the switch is connected due to the actuation, power may be supplied from the power source to charge the battery 132. Upon pressing the button again, the lift unit 104 may be configured to decouple the battery 132 from the power source in a disconnected state so that power is no longer supplied from the power source to charge the battery 132.

In another example, the switch 185 may include a temperature switch. Upon detection of a measured temperature reaching a predetermined temperature value, the temperature switch may be configured to open or close a corresponding switch contact. For example, when the measured temperature is below the predetermined temperature value, the temperature switch may close to provide current and charge the battery 132. When the measured temperature reaches the predetermined temperature value, the switch may open and prevent current from flowing to the battery 132. In this manner, the lift unit 104 may be configured to actuate the switch 185 so that power may be supplied from the power source to charge the battery 132 based on the opening or closing of the switch contact of the temperature switch. Accordingly, current may be prevented or provided to or from the battery 132 depending on whether or not the temperature switch is open or closed.

The lift unit 104 may further include one or more interface components (not shown) that are generally hardware components that provide an interface with a user or an external device. For example, the one or more interface components may include user interface components, communications hardware, and/or the like. Illustrative examples of the one or more interface components include, but are not limited to, hardware components that receive inputs from a user and transmit signals corresponding to the inputs, such as a keyboard, a mouse, a joystick, a touch screen, a remote control, a pointing device, a video input device, an audio input device, a haptic feedback device, a touchscreen and/or the like. Other illustrative examples of the one or more interface components include, but are not limited to, network interface hardware (e.g., wired or wireless networking hardware), such as a modem, LAN port, wireless fidelity (Wi-Fi) card, WiMax card, mobile communications hardware, and/or other hardware for communicating with other networks and/or devices. Other devices that may be used for the one or more interface components not specifically described herein are contemplated and included in the scope of this disclosure.

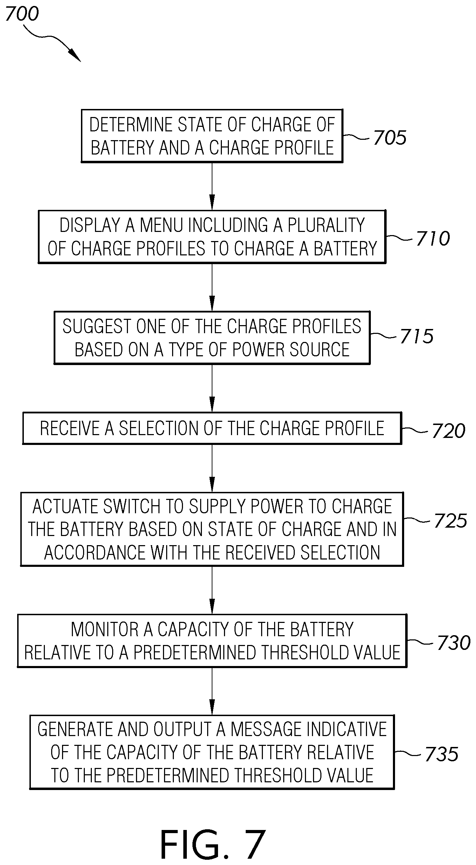

FIG. 7 depicts a flow diagram of an illustrative method performed by the lift unit 104 of FIG. 1 according to one or more aspects shown and described herein. FIG. 7 may reference and incorporate any of the above constituent components and operations of the rail-mounted lift system 100 of FIG. 1, the carriage 206 of the rail-mounted lift system 100 of FIGS. 2A-2B, the lift unit 104 of FIG. 3, the conductive rail 102 of FIG. 4, the user interface component of the lift unit 104 of FIG. 5, and the user interface screens of the user interface component of FIGS. 6A-6D. For purposes of brevity, the below blocks for the method 700 may be carried out with reference to the constituent components and operations of the lift unit 104 previously explained above with respect to any of FIGS. 1 to 6.

At block 705, the non-transitory, processor-readable storage medium 183 may include one or more instructions stored thereon that, when executed, cause the processor 182 to determine a state of charge of a battery 132, and also determine a charge profile. For example, the charge profile may be determined based on a type of the power source, and the charge profile may be defined from a battery efficiency perspective to thereby extend the lifecycle of the battery 132. By way of example, a first charge profile may correspond to a performance charge profile, a second charge profile may correspond to an optimized charge profile, and a third charge profile may correspond to a reliability charge profile. As will be further explained, each of the charge profiles may be defined to include their respective maximum charge capacity and recharge threshold capacity.

The performance charge profile, such as "Performance" 435, may include an operation mode in which the battery 132 is not forced to enter a deep discharge mode. For example, the operation mode of the performance charge profile may include charging the battery 132 to a maximum predetermined threshold value, such as 100%, after the battery 132 has reached a predetermined threshold value of, for example, 95%. It is understood that charging the battery 132 to 100% after the battery 132 has reached 95% are exemplary capacity percentages and not considered to be limiting, and that other percentages or amounts may be utilized. As used herein, "deep discharge" refers to discharging a predetermined portion, such as a percentage or an amount, relative to a rated total capacity of a battery 132 until a cut-off point voltage is reached. Without limitation and by way of example, the deep discharge may include discharging greater than 50% of the rated total capacity of the battery 132, greater than 60% of the rated total capacity of the battery 132, greater than 70% of the rated total capacity of the battery 132, greater than 80% of the rated total capacity of the battery 132, greater than 90% of the rated total capacity of the battery 132, or greater than 95% of the rated total capacity of the battery 132.

The optimized charge profile, such as "Optimized" 440, may include an operation mode in which the battery 132 is not forced to enter a deep discharge mode. For example, the operation mode of the optimized charge profile may include charging the battery 132 to a maximum predetermined threshold value, such as 95%, after the battery 132 has reached a predetermined threshold value of, for example, 85%. It is understood that charging the battery 132 to 95% after the battery 132 has reached 85% are exemplary capacity percentages and not considered to be limiting, and that other percentages or amounts may be utilized.

The reliability charge profile, such as "Reliability" 445, may include an operation mode in which the battery 132 is forced to enter a deep discharge mode. For example, the operation mode of the reliability charge profile may include deep discharging the battery 132 to a predetermined threshold percentage value, and then recharging the battery 132 to a maximum threshold percentage value, such as 95%. It is understood that deep discharging the battery 132 and then recharging the battery 132 until it has reached 95% are exemplary capacity percentages and not considered to be limiting, and that other percentages or amounts may be utilized.

At block 710, the non-transitory, processor-readable storage medium 183 may include one or more instructions stored thereon that, when executed, cause the processor 182 to display a menu including a plurality of charge profiles to charge the battery 132 with the power source. For example, on a user interface 184, at least one charge profile includes charging the battery 132 to a first maximum predetermined threshold value after the battery 132 reaches a first predetermined threshold value, at least one charge profile includes charging the battery 132 to a second maximum predetermined threshold value after the battery 132 reaches a second predetermined threshold value, and at least one charge profile includes deep discharging the battery 132 to a third predetermined threshold value prior to charging the battery 132 to a third maximum predetermined threshold value.

At block 715, the non-transitory, processor-readable storage medium 183 may include one or more instructions stored thereon that, when executed, cause the processor 182 to suggest one of the charge profiles based on a type of a power source, such as power source 157. In certain embodiments, the type of the power source 157 comprises a wall charger, and the suggested one of the charge profiles includes charging the battery 132 to a first maximum predetermined threshold value after the battery 132 reaches a first predetermined threshold value. In certain embodiments, the type of the power source 157 comprises an in-rail charging assembly, wherein in-rail charging of the battery 132 occurs via the in-rail charging assembly, and the suggested one of the charge profiles includes deep discharging the battery 132 to a third predetermined threshold value prior to charging the battery 132 to a third maximum predetermined threshold value.

At block 720, the non-transitory, processor-readable storage medium 183 may include one or more instructions stored thereon that, when executed, cause the processor 182 to receive a selection of the charge profile. In certain embodiments, the selection of the charge profile may include the suggested one of the charge profiles based on the type of the power source 157. In certain embodiments, the selection of the charge profile may include one of the plurality of charge profiles based on the menu including the plurality of charge profiles to charge the battery 132.

At block 725, the non-transitory, processor-readable storage medium 183 may include one or more instructions stored thereon that, when executed, cause the processor 182 to actuate a switch 185 of the lift unit 104 to supply power and charge the battery 132 based on the state of charge of the battery 132 and in accordance with the received selection. In certain embodiments, the charging of the battery 132 may be in accordance with the suggested one of the charge profiles based on the type of the power source 157. In certain embodiments, the charging of the battery 132 may be in accordance with one of the plurality of charge profiles based on the menu including the plurality of charge profiles to charge the battery 132.

At block 730, the non-transitory, processor-readable storage medium 183 may include one or more instructions stored thereon that, when executed, cause the processor 182 to monitor a capacity of the battery 132 relative to a predetermined threshold value.

At block 735, the non-transitory, processor-readable storage medium 183 may include one or more instructions stored thereon that, when executed, cause the processor 182 to generate a message indicative of the capacity of the battery 132 relative to the predetermined threshold value. For example, the processor 182 may be caused to output the message to the user interface 184 in the form of a haptic vibration, a display, a sound emission, or any combination thereof.

It should now be understood that the devices, systems, and methods described herein are directed to lift units, such as subject lift units, that are configured to selectively supply power to charge a battery within the lift units. Conventional lift technology includes always connecting the battery to a power source, which can result in constant drainage and charging of the battery, thereby leading to reduced battery capacity as well as battery life. In particular, the lift unit includes a switch that is configured to decoupled the battery from the power source so that the battery can be discharged to a lower state of charge. Upon reaching a predetermined state of charge, the lift unit is configured to actuate the switch to supply power from a power source based on one or more factors, including a state of charge of the battery and a selected charge profile. In this manner, the battery life is extended and a larger capacity of the battery is provided for a greater period of time. The charge profile may be utilized to further provide for customizability for a user in case the user does not desire to use the default programming of the lift unit and/for ease of use in selecting an appropriate charge profile to utilize, thereby reducing complexity associated with required knowledge pertaining to, for example, reliability and performance of battery charge profiles. Consequently, this reduces or eliminates the need for the battery to be immediately or frequently replaced and/or the need for resorting to incorporating additional components to preserve battery life, thereby avoiding apparatus operability, efficiency, and compatibility issues, as well as mitigating cost-prohibitive issues due to the type of material used for the battery.

Embodiments of the invention can be described with reference to the following numbered clauses, with preferred features laid out in the dependent clauses:
1. A rail-mounted lift system, including: a conductive rail electrically coupled to a power source; and a lift unit supported by the conductive rail, the lift unit comprising a battery and a switch for selectively coupling the battery to the power source via the conductive rail, wherein the lift unit is configured to: determine a state of charge of the battery, determine a selected charge profile, and actuate to supply power from the power source based on the state of charge and the selected charge profile.
2. The rail-mounted lift system of the preceding clause, wherein the selected charge profile includes charging the battery to a first maximum predetermined threshold value after the battery reaches a first predetermined threshold value.
3. The rail-mounted lift system of clause 2, wherein the selected charge profile includes charging the battery to a second maximum predetermined threshold value after the battery reaches a second predetermined threshold value.
4. The rail-mounted lift system of clause 3, wherein the selected charge profile includes deep discharging the battery to a third predetermined threshold value prior to charging the battery to a third maximum predetermined threshold value.
5. The rail-mounted lift system of any of the preceding clauses, wherein the lift unit is further configured to: via the switch, decouple the battery from the power source to discharge the battery to a reduced state of charge, and actuate the switch to supply the power from the power source to charge the battery to a predetermined value that exceeds the state of charge of the battery.
6. The rail-mounted lift system of any of the preceding clauses, wherein the lift unit is further configured to: display, via a user interface, a menu of a plurality of charge profiles wherein the selected charge profile is selected from a plurality of charge profiles displayed via a user interface; receive, via user input, a selection of one of the plurality of charge profiles; and charge the battery in accordance with the selected charge profile.
7. The rail-mounted lift system of any of the preceding clauses, wherein the lift unit is further configured to suggest one of the charge profiles based on a type of the power source .
8. The rail-mounted lift system of the preceding clause, wherein the lift unit is configured to determine that the type of the power source includes a wall charger, and the suggested charge profile is suggested in accordance with the type of the power source including the wall charger, the suggested charge profile including charging the battery during a predetermined time frame of a day.
9. The rail-mounted lift system of any of the preceding clauses, wherein the lift unit is configured to determine that the type of the power source includes a wall charger, and the suggested charge profile is suggested in accordance with the type of the power source including the wall charger, the suggested charge profile including charging the battery to achieve a predetermined number of lifts by the rail-mounted lift system.
10. The rail-mounted lift system of any of the preceding clauses, wherein the lift unit is further configured to monitor whether a capacity of the battery is equal to or greater than a predetermined threshold value over a predetermined time period prior to forcing deep discharge of the battery.
11. The rail-mounted lift system of the preceding clause, wherein the lift unit is further configured to: generate a message indicative of the capacity of the battery being equal to or greater than the predetermined threshold value over the predetermined time period; and output the message to a user interface.
12. The rail-mounted lift system of any of the preceding clauses, wherein the switch is selected from the group consisting of a toggle switch, a pushbutton switch, and a selector switch.
13. The rail-mounted lift system of any of the preceding clauses, wherein the switch is selected from the group consisting of a limit switch, a proximity switch, a pressure switch, a temperature switch, a bipolar transistor, a power diode, a Metal Oxide Semiconductor Field Effect Transistor (MOSFET), an Insulated Gate Bipolar Transistor (IGBT), a Silicon Controlled Rectifier (SCR), a Triode AC (TRIAC) switch, a Diode AC (DIAC) switch, and a thyristor.
14. A method includes: determining, by a lift unit of a rail-mounted lift system, a state of charge of a battery, the rail-mounted lift system comprising a conductive rail electrically coupled to a power source and the lift unit, the lift unit being supported by the conductive rail and the lift unit comprising the battery and a switch for selectively coupling the battery to the power source via the conductive rail; determining, by the lift unit, a selected charge profile; and actuating the switch to supply power from the power source based on the state of charge and the selected charge profile.
15. The method of the preceding clause, wherein the selected charge profile includes charging the battery to a first maximum predetermined threshold value after the battery reaches a first predetermined threshold value.
16. The method of clause 15, wherein the selected charge profile includes charging the battery to a second maximum predetermined threshold value after the battery reaches a second predetermined threshold value.
17. The method of clause 16, wherein the selected charge profile includes deep discharging the battery to a third predetermined threshold value prior to charging the battery to a third maximum predetermined threshold value.
18. The method of any one of clauses 14 to 17, further comprising decoupling, via the switch and by the lift unit, the battery from the power source to discharge the battery to a reduced state of charge; and actuating the switch to supply the power from the power source to charge the battery to a predetermined value that exceeds the state of charge of the battery.
19. The method of any one of clauses 14 to 18, further comprising: displaying, via a user interface, a menu of a plurality of charge profiles wherein the selected charge profile is selected from a plurality of charge profiles displayed via a user interface; receiving, via user input, a selection of one of the plurality of charge profiles; and charging the battery in accordance with the selected charge profile.
20. The method of any one of clauses 14 to 19, further comprising suggesting one of the charge profiles based on a type of the power source.
21. The method of any one of clauses 14 to 20, further comprising determining, by the lift unit, that the type of the power source includes a wall charger, and the suggested charge profile is suggested in accordance with the type of the power source including the wall charger, the suggested charge profile including charging the battery during a predetermined time frame of a day.
22. The method of any one of clauses 14 to 21, further comprising determining, by the lift unit, that the type of the power source includes a wall charger, and the suggested charge profile is suggested in accordance with the type of the power source including the wall charger, the suggested charge profile including charging the battery to achieve a predetermined number of lifts by the rail-mounted lift system.
23. The method of any one of clauses 14 to 22, further comprising monitoring whether a capacity of the battery is equal to or greater than a predetermined threshold value over a predetermined time period prior to forcing deep discharge of the battery.
24. The method of any one of clauses 14 to 23, further comprising: generating a message indicative of the capacity of the battery being equal to or greater than the predetermined threshold value over the predetermined time period; and outputting the message to a user interface.
25. The method of any one of clauses 14 to 24, wherein the switch is selected from the group consisting of a toggle switch, a pushbutton switch, and a selector switch.
26. The method of any one of clauses 14 to 25, wherein the switch is selected from the group consisting of a limit switch, a proximity switch, a pressure switch, a temperature switch, a bipolar transistor, a power diode, a Metal Oxide Semiconductor Field Effect Transistor (MOSFET), an Insulated Gate Bipolar Transistor (IGBT), a Silicon Controlled Rectifier (SCR), a Triode AC (TRIAC) switch, a Diode AC (DIAC) switch, and a thyristor.
27. A lift unit, including: a lift motor; a battery electrically coupled to the lift motor to supply electrical power for actuating the lift motor; a switch electrically coupled between the battery and a power source; and a controller configured to: determine a state of charge of the battery, determine a selected charge profile, and actuate the switch to cause power to be delivered from the power source to the battery based on the state of charge and the selected charge profile.
28. The lift unit of the preceding clause, wherein the selected charge profile includes charging the battery to a first maximum predetermined threshold value after the battery reaches a first predetermined threshold value.
29. The lift unit of clause 28, wherein the selected charge profile includes charging the battery to a second maximum predetermined threshold value after the battery reaches a second predetermined threshold value.
30. The lift unit of clause 29, wherein the selected charge profile includes deep discharging the battery to a third predetermined threshold value prior to charging the battery to a third maximum predetermined threshold value.
31. The lift unit of any one of clauses 27 to 30, wherein the controller is further configured to: via the switch, decouple the battery from the power source to discharge the battery to a reduced state of charge, and actuate the switch to supply the power from the power source to charge the battery to a predetermined value that exceeds the state of charge of the battery.
32. The lift unit of any one of clauses 27 to 31, wherein the controller is further configured to: display, via a user interface, a menu of a plurality of charge profiles wherein the selected charge profile is selected from a plurality of charge profiles displayed via a user interface; receive, via user input, a selection of one of the plurality of charge profiles; and charge the battery in accordance with the selected charge profile.
33. The lift unit of any one of clauses 27 to 32, wherein the controller is further configured to suggest one of the charge profiles based on a type of the power source.
34. The lift unit of any one of clauses 27 to 33, wherein the controller is further configured to determine that the type of the power source includes a wall charger, and the suggested charge profile is suggested in accordance with the type of the power source including the wall charger, the suggested charge profile including charging the battery during a predetermined time frame of a day.
35. The lift unit of any one of clauses 27 to 34, wherein the controller is further configured to determine that the type of the power source includes a wall charger, and the suggested charge profile is suggested in accordance with the type of the power source including the wall charger, the suggested charge profile including charging the battery to achieve a predetermined number of lifts by the rail-mounted lift system.
36. The lift unit of any one of clauses 27 to 35, wherein the controller is further configured to monitor whether a capacity of the battery is equal to or greater than a predetermined threshold value over a predetermined time period prior to forcing deep discharge of the battery.
37. The lift unit of any one of clauses 27 to 36, wherein the controller is further configured to: generate a message indicative of the capacity of the battery being equal to or greater than the predetermined threshold value over the predetermined time period; and output the message to a user interface.
38. The lift unit of any one of clauses 27 to 37, wherein the switch is selected from the group consisting of a toggle switch, a pushbutton switch, and a selector switch.
39. The lift unit of any one of clauses 27 to 38, wherein the switch is selected from the group consisting of a limit switch, a proximity switch, a pressure switch, a temperature switch, a bipolar transistor, a power diode, a Metal Oxide Semiconductor Field Effect Transistor (MOSFET), an Insulated Gate Bipolar Transistor (IGBT), a Silicon Controlled Rectifier (SCR), a Triode AC (TRIAC) switch, a Diode AC (DIAC) switch, and a thyristor.
40. A non-transitory, computer-readable medium comprising instructions that, when executed by at least one processor, cause the at least one processor to perform one or more operations comprising: determining, by a rail-mounted lift system, a state of charge of a battery, the rail-mounted lift system comprising a conductive rail electrically coupled to a power source and a lift unit, the lift unit being supported by the conductive rail and the lift unit comprising a battery and a switch for selectively coupling the battery to the power source via the conductive rail; determining a selected charge profile; and actuating the switch to supply power from the power source based on the state of charge and the selected charge profile.
41. The non-transitory, computer-readable medium of clause 40 or clause 41, wherein the selected charge profile includes charging the battery to a first maximum predetermined threshold value after the battery reaches a first predetermined threshold value.
42. The non-transitory, computer-readable medium of any one of clauses 40 to 41, wherein the selected charge profile includes charging the battery to a second maximum predetermined threshold value after the battery reaches a second predetermined threshold value.
43. The non-transitory, computer-readable medium of any one of clauses 40 to 42, wherein the selected charge profile includes deep discharging the battery to a third predetermined threshold value prior to charging the battery to a third maximum predetermined threshold value.
44. The non-transitory, computer-readable medium of any one of clauses 40 to 43, the one or more operations further comprising decoupling the battery from the power source to discharge the battery to a reduced state of charge; and actuating the switch to supply the power from the power source to charge the battery to a predetermined value that exceeds the state of charge of the battery.
45. The non-transitory, computer-readable medium of any one of clauses 40 to 44, the one or more operations further comprising: displaying, via a user interface, a menu of a plurality of charge profiles wherein the selected charge profile is selected from a plurality of charge profiles displayed via a user interface; receiving, via user input, a selection of one of the plurality of charge profiles; and charging the battery in accordance with the selected charge profile.
46. The non-transitory, computer-readable medium of any one of clauses 40 to 45, the one or more operations further comprising suggesting one of the charge profiles based on a type of the power source.
47. The non-transitory, computer-readable medium of any one of clauses 40 to 46, the one or more operations further comprising determining that the type of the power source includes a wall charger, and the suggested charge profile is suggested in accordance with the type of the power source including the wall charger, the suggested charge profile including charging the battery during a predetermined time frame of a day.
48. The non-transitory, computer-readable medium of any one of clauses 40 to 47, the one or more operations further comprising determining that the type of the power source includes a wall charger, and the suggested charge profile is suggested in accordance with the type of the power source including the wall charger, the suggested charge profile including charging the battery to achieve a predetermined number of lifts by the rail-mounted lift system.
49. The non-transitory, computer-readable medium of any one of clauses 40 to 48, the one or more operations further comprising: monitoring whether a capacity of the battery is equal to or greater than a predetermined threshold value over a predetermined time period prior to forcing deep discharge of the battery; generating a message indicative of the capacity of the battery being equal to or greater than the predetermined threshold value over the predetermined time period; and outputting the message to a user interface.

## Claims

1. A rail-mounted lift system, comprising:
a conductive rail electrically coupled to a power source; and
a lift unit supported by the conductive rail, the lift unit comprising a battery and a switch for selectively coupling the battery to the power source via the conductive rail,
wherein the lift unit is configured to:
determine a state of charge of the battery,
determine a selected charge profile, and
actuate the switch to supply power from the power source based on the state of charge and the selected charge profile.

2. The rail-mounted lift system of claim 1, wherein the selected charge profile includes charging the battery to a first maximum predetermined threshold value after the battery reaches a first predetermined threshold value.

3. The rail-mounted lift system of claim 2, wherein the selected charge profile includes charging the battery to a second maximum predetermined threshold value after the battery reaches a second predetermined threshold value.

4. The rail-mounted lift system of any claim 3, wherein the selected charge profile includes deep discharging the battery to a third predetermined threshold value prior to charging the battery to a third maximum predetermined threshold value.

5. The rail-mounted lift system of any of the preceding claims, wherein the lift unit is further configured to:
via the switch, decouple the battery from the power source to discharge the battery to a reduced state of charge, and
actuate the switch to supply the power from the power source to charge the battery to a predetermined value that exceeds the state of charge of the battery.

6. The rail-mounted lift system of any of the preceding claims, wherein the lift unit is further configured to:
display, via a user interface, a menu of a plurality of charge profiles wherein the selected charge profile is selected from a plurality of charge profiles displayed via a user interface;

7. The rail-mounted lift system of claim 6 wherein the lift unit is further configured to receive, via user input, a selection of one of the plurality of charge profiles; and
charge the battery in accordance with the selected charge profile.

8. The rail-mounted lift system of any of the preceding claims, wherein the lift unit is further configured to suggest one of the charge profiles based on a type of the power source.

9. The rail-mounted lift system of claim 8, wherein the lift unit is configured to determine that the type of the power source includes a wall charger, and the suggested charge profile is suggested in accordance with the type of the power source including the wall charger, the suggested charge profile including charging the battery during a predetermined time frame of a day.

10. The rail-mounted lift system of either claim 8 or claim 9, wherein the lift unit is configured to determine that the type of the power source includes a wall charger, and the suggested charge profile is suggested in accordance with the type of the power source including the wall charger, the suggested charge profile including charging the battery to achieve a predetermined number of lifts by the rail-mounted lift system.

11. The rail-mounted lift system of any of the preceding claims, wherein the lift unit is further configured to monitor whether a capacity of the battery is equal to or greater than a predetermined threshold value over a predetermined time period prior to forcing deep discharge of the battery.

12. The rail-mounted lift system of claim 11, wherein the lift unit is further configured to:
generate a message indicative of the capacity of the battery being equal to or greater than the predetermined threshold value over the predetermined time period.

13. The rail-mounted lift system of claim 12 wherein the lift unit is further configured to output the message to a user interface.

14. The rail-mounted lift system of any of the preceding claims, wherein the switch is selected from the group consisting of a toggle switch, a pushbutton switch, and a selector switch.

15. The rail-mounted lift system of any of the preceding claims, wherein the switch is selected from the group consisting of a limit switch, a proximity switch, a pressure switch, a temperature switch, a bipolar transistor, a power diode, a Metal Oxide Semiconductor Field Effect Transistor (MOSFET), an Insulated Gate Bipolar Transistor (IGBT), a Silicon Controlled Rectifier (SCR), a Triode AC (TRIAC) switch, a Diode AC (DIAC) switch, and a thyristor.
